# EUROPÄISCHE PATENTSCHRIFT

(11) **EP 0 387 635 B1**
(45) Veröffentlichungstag und Bekanntmachung des Hinweises auf die Patenterteilung: **12.10.1994**
(21) Anmeldenummer: 90104085.7
(22) Anmeldetag: 02.03.1990
(51) Int. Cl.: H01H 33/66, H02B 11/12

(54) **Mehrpolige Vakuumschalteranordnung**
Multipolar vacuum switch configuration
Configuration d'interrupteurs à vide multipolaire

(30) Priorität: 16.03.1989 CH 984/89
(43) Veröffentlichungstag der Anmeldung: 19.09.1990
(73) Patentinhaber: GEC Alsthom T&D AG, 5036 Oberentfelden (CH)
(72) Erfinder: Lippi, Bruno, CH-5000 Aarau (CH); Suter, Ernst, CH-5742 Kölliken (CH); Wüthrich, Hans-Rudolf, CH-5036 Oberentfelden (CH); Meier, Thomas, CH-5013 Niedergösgen (CH)
(74) Vertreter: Patentanwälte Schaad, Balass, Menzl & Partner AG

(56) Entgegenhaltungen:
- EP-A- 0 060 054
- US-A- 4 587 390

## Beschreibung

Die vorliegende Erfindung betrifft eine mehrpolige Vakuumschalteranordnung.

Aus der EP-A- 0 060 054 ist eine mehrpolige Vakuumschalteranordnung mit einem fahrbaren Gestell bekannt. An diesem Gestell ist ein einstückiger Isoliertragteil rückwärts befestigt, welcher drei nebeneinander angeordnete nach vorne offene Ausnehmungen aufweist, in welchen je eine Vakuumschaltröhre befestigt ist. Am Gestell ist weiter ein Gehäuse befestigt, in welchem ein Antrieb, beispielsweise eine Federkraftantrieb, angeordnet ist, der über Gestänge mit den bewegbaren Schaltkontakten der Vakuumschaltröhren verbunden ist. Am Isoliertragteil sind gegen unten vorstehende Fortsätze angeformt die Lagerstellen für doppelarmige Hebel der Gestänge bilden. Obwohl dieser Isoliertragteil mehrere Funktionen übernimmt, ist die Konstruktion der gesamten Schalteranordnung immer noch aufwendig.

Eine weitere Schalteranordnung ist aus der US- Patentschrift 4,587,390 bekannt. Diese weist ein einen Federkraftantrieb enthaltendes Gehäuse auf, auf dem drei rohrförmige Isoliertragrahmen stehend angeordnet sind. In jedem Isoliertragrahmen ist eine Vakuumschaltröhre befestigt, deren Kontakte mit je einem den jeweiligen Isoliertragrahmen in radialer Richtung durchdringenden Anschlussleiter verbunden sind. Im Gehäuse des Federkraftantriebes sind zwei parallele, seitlich voneinander beabstandete Schilder vorgesehen, an welchen die Antriebsteile des Federkraftantriebes gelagert sind. Jeder bewegbare Kontakt der Vakuumschaltröhren ist über je ein Gestänge mit dem für alle Pole gemeinsamen Abtriebsglied des Federkraftantriebes wirkverbunden. Diese Schalteranordnung weist viele Einzelteile auf und ist in ihrer Konstruktion und Montage aufwendig.

In der nicht vorveröffentlichten EP-A- 0 346 603 ist eine mehrpolige Vakuumschalteranordnung beschrieben, die einen einzigen Isoliertragteil aufweist, der die Vakuumschaltröhren aller Pole aufnimmt und an welchem ein Lagerungsteil oder mehrere Lagerungsteile für die Lagerung von Teilen des Federkraftantriebes vorgesehen sind. Dieser Isoliertragteil ist auf einem plattenförmigen, fahrbaren, metallenen Gestell befestigt.

Es ist Aufgabe der vorliegenden Erfindung, eine Schalteranordnung zu schaffen, welche in ihrem Aufbau einfach ist wenig Teile aufweist und mit wenig Aufwand herstellbar ist.

Diese Aufgabe wird durch die Merkmale des Anspruchs 1 gelöst.

Es ist ein einstückiger Isoliertragrahmen vorgesehen, der vom Isoliertragteil, mindestens einem Lagerungsteil zum Lagern von Teilen des Federkraftantriebes und vom Gestell gebildet ist. Der Isoliertragrahmen ist somit nicht nur ein isolierendes Tragelement für die Vakuumschaltröhren, sondern er ist auch ein fester Bestandteil des Antriebes und des Gestells. Der Antrieb, der Isoliertragteil und das Gestell bilden somit eine voneinander nicht mehr trennbare Funktionseinheit. Ein solcher Isoliertragrahmen kann durch Spritzen, Giessen, Schäumen oder ähnliche Verfahren hergestellt werden.

In einer bevorzugten Ausführungsform weist der Isoliertragrahmen einen im wesentlichen hohlen kastenförmigen Fussteil auf, auf welchem der Isoliertragteil angeordnet ist. Dieser Fussteil gibt dem Isoliertragrahmen eine gute Stabilität und bietet gegebenenfalls Platz für den Federkraftantrieb wie dies im Anspruch 7 angegeben ist, oder für die den Federkraftantrieb mit den bewegbaren Schaltkontakten der Vakuumschaltröhren verbindenden Gestänge, wie dies im Anspruch 6 definiert ist. Dies ermöglicht eine sehr kompakte Bauweise der Schalteranordnung.

Eine besonders bevorzugte ausbildungsform ist im Anspruch 3 angegeben. Diese Ausbildungsform ermöglicht eine einfache Herstellung des Isoliertragrahmens.

Mit einer doppelwandigen Ausbildung des Wandteils gemäss Anspruch 4 wird eine besonders gute Stabilität und Isolationsfähigkeit des Wandteils erziehlt. Die freie Zugänglichkeit zwischen den Wandteilwänden ermöglicht die problemlose Befestigung und Montage von beispielsweise spannungsführenden Teilen am Wandteil, wobei die Isolation des Wandteils erhalten bleibt.

In einer bevorzugten Ausführungsform ist der Federkraftantrieb auf der den Isoliergehäusen abgewandten Seite des Wandteils angeordnet, wie dies im Anspruch 5 bzw. 6 angegeben ist. Eine solche Anordnung bietet eine problemlose Zugänglichkeit zum Federkraftantrieb, auch wenn die Schalteranordnung im Betrieb steht.

In einer weiteren bevorzugten Ausbildungsform gemäss Anspruch 7 ist der Federkraftantrieb im Fussteil des Isoliertragrahmens vorgesehen. Dies ermöglicht eine besonders schlanke Ausbildungsform der Schalteranordnung und eine besonders einfache Ausbildung der Gestänge zwischen dem Federkraftantrieb und den Vakuumschaltröhren.

Weitere Ausbildungsformen sind in den weiteren abhängigen Ansprüchen angegeben.

Die Erfindung wird nun anhand von in den Figuren dargestellten Ausführungsformen näher beschrieben.

Es zeigen rein schematisch:
- Figur 1: in Draufsicht einen Isoliertragrahmen,
- Figur 2: einen Vertikalschnitt entlang der Linie II-II der Figur 1 durch den Isoliertragrahmen mit an diesem angeordneten Vakuumschaltröhren und einem Federkraftantrieb,
- Figur 3: eine Seitenansicht des unteren Teils des Isoliertragrahmens,
- Figur 4: im Schnitt entlang der Linie II-II der Figur 1 eine weitere Ausbildungsform des Fussteils des Isoliertragrahmens, und
- Figur 5: einen Vertikalschnitt durch einen unteren Teil eines Isoliertragrahmens, an welchem der Federkraftantrieb im Fussteil gelagert ist.

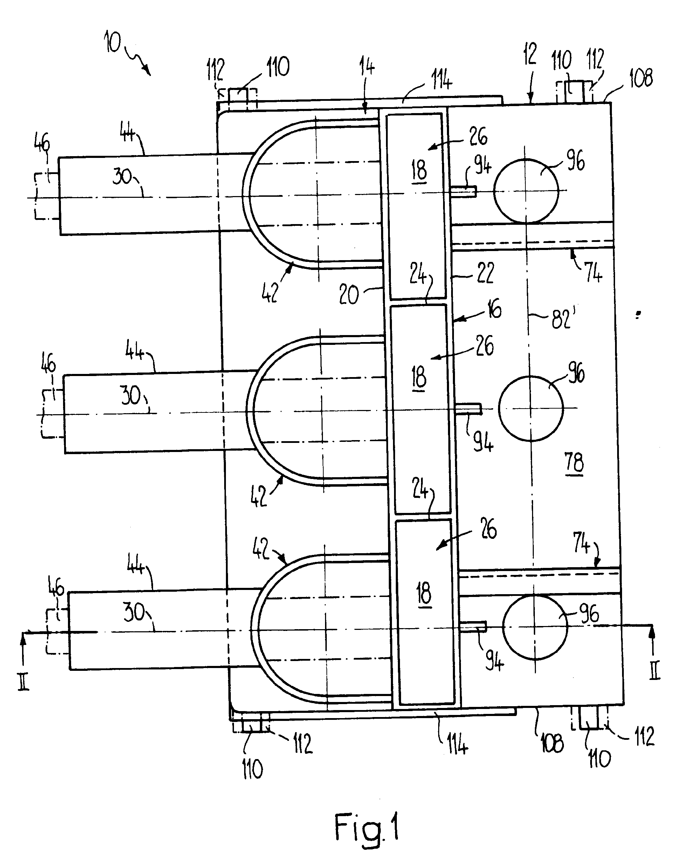

Die Figuren 1 bis 3 zeigen einen mit 10 bezeichneten Isoliertragrahmen einer dreipoligen Schalteranordnung. Dieser Isoliertragrahmen 10 weist einen hohlen, gegen unten offenen, kastenförmigen Fussteil 12 auf, auf welchem ein Isoliertragteil 14 für die drei Vakuumschaltröhren 15 angeformt ist. Der Isoliertragteil 14 weist einen aufrechtstehenden Wandteil 16 auf, der ungefähr entlang einer Mittelebene des Fussteils 12 verläuft.

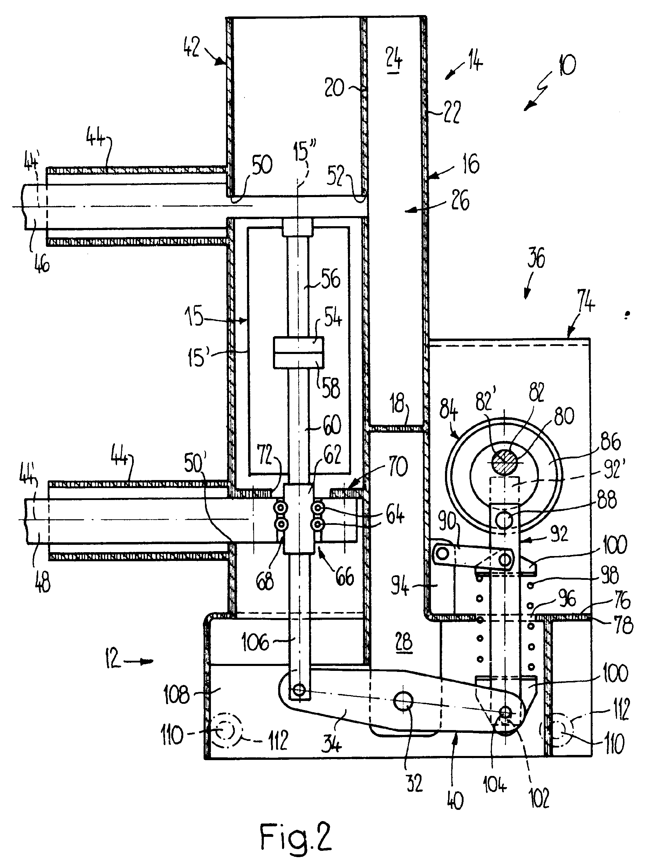

Der Wandteil 16 ist doppelwandig ausgebildet und weist in der Draufsicht den Querschnitt eines rechteckförmigen Hohlprofils auf. Auf halber Höhe des Wandteils 16 ist ein horizontaler Zwischenboden 18 vorgesehen, der die beiden Wandteilwände 20,22 miteinander verbindet (siehe insbesondere Figur 2). Oberhalb des Zwischenbodens 18 sind zwei vertikale, die beiden Wandteilwände 20,22 miteinander verbindende Stege 24 vorgesehen, die die den einzelnen Polen der Schalteranordnung zugeordneten, durch die Wandteilwände 20,22 und die Stege 24 begrenzten, gegen oben hin offenen Hohlräume 26 gegeneinander isolieren (Figur 1). Unterhalb des Zwischenbodens 18 sind zwischen den beiden Wandteilwänden 20,22 weitere Stege 28 angeordnet, die im Bereich von strichpunktiert angedeuteten vertikalen Ebenen 30 verlaufen, welche die Mittelebene jedes Poles der Schalteranordnung bilden. Diese weiteren Stege 28 sind gegen unten über den Wandteil 16 hinaus verlängert und stehen zungenförmig in den Fussteil 12 vor. In diesen vorstehenden Bereichen weisen die weiteren Stege 28 Lager stellen 32 zum jeweiligen Lagern von doppelarmigen Hebeln 34 von einen Federkraftantrieb 36 mit den Vakuumschaltröhren 15 verbindenden Gestängen 40 auf.

Auf der in den Figuren links dargestellten Vorderseite des Wandteils 16 sind an der Wandteilwand 20 im Querschnitt u-förmige, zur Mittelebene 30 jedes Poles symmetrische Isoliergehäuse 42 angeformt, die zusammen mit Abschnitten der Wandteilwand 20 die Vakuumschaltröhren 15 vollständig umgreifen. Die Isoliergehäuse 42 sind gegen oben und unten gegen den Fussteil 12 hin offen.

An jedem Isoliergehäuse 42 sind zwei voneinander in vertikaler Richtung beabstandete, rohrförmige, in horizontaler Richtung verlaufende, gegen vorne abstehende Isolierrohre 44 angeformt, deren Längsachsen 44′ in den betreffenden Mittelebenen 30 verlaufen. Jedes Isolierrohr 44 umfasst einen jeweils dazu koaxialen oberen bzw. unteren Anschlussleiter 46,48 (vergleiche insbesondere Figur 2). Die oberen Anschlussleiter 46 sind jeweils durch eine entsprechende Ausnehmung 50 im Isoliergehäuse 42 und einen dazu diametral gegenüberliegenden Durchlass 52 in der Wandteilwand 20 geführt. Die oberen Anschlussleiter 46 können somit mittels in den Hohlräumen 26 angeordneten, nicht dargestellten Befestigungselementen am Isoliertragrahmen 10 befestigt sein. Ein solcher Anschlussleiter 46, die Montage und Befestigung des Anschlussleiters 46 und der Vakuumschalterröhren 15 ist in der nicht vorveröffentlichten EP-A- 0 380 980 ausführlich beschrieben.

Die Vakuumschaltröhre 15 weist einen feststehenden Schaltkontakt 54 auf, der am inneren Ende eines durch das Gehäuse 15′ der Vakuumschaltröhre 15 hindurchgeführten und an diesem befestigten Schaltstift 56 befestigt ist. An seinem oberen Ende ist der Schaltstift 56 und somit die Vakuumschaltröhre 15 am oberen Anschlussleiter 46 befestigt. Die Achse der Vakuumschaltröhre 15 verläuft in senkrechter Richtung und ist mit 15˝ bezeichnet. Ein bewegbarer Schaltkontakt 58 der Vakuumschaltröhre 15 ist am oberen Ende eines dicht durch das Gehäuse 15′ hindurchgeführten Schaltstössels 60 befestigt, der an seinem unteren Ende eine Verdickung 62 aufweist, an welcher sich Rollen 64 einer Rollenkontaktanordnung 66 abwälzen.

Die Verdickung 62 des Schaltstössels 60 durchstösst eine in Richtung der Achse 15˝ der Vakuumschaltröhre 15 verlaufende Ausnehmung 68 im unteren Anschlussleiter 48, welcher durch eine entsprechende Ausnehmung 50′ im Isoliergehäuse 42 hindurchgeführt ist. Am Isoliergehäuse 42 und an der Wandteilwand 20 ist ein Zwischenboden 70 angeformt, welcher einen Durchlass 72 für den Schaltstössel 60 aufweist und an welchem der untere Anschlussleiter 48 festgeschraubt ist. Die Rollen 64 wälzen sich ebenfalls an der Ausnehmung 68 des unteren Anschlussteiles 48 ab. Die Rollenkontaktanordnung 66 und die Befestigung und Ausbildung des unteren Anschlussleiters 48 sind in der CH-Patentanmeldung Nr. 00 295/89-3 näher beschrieben.

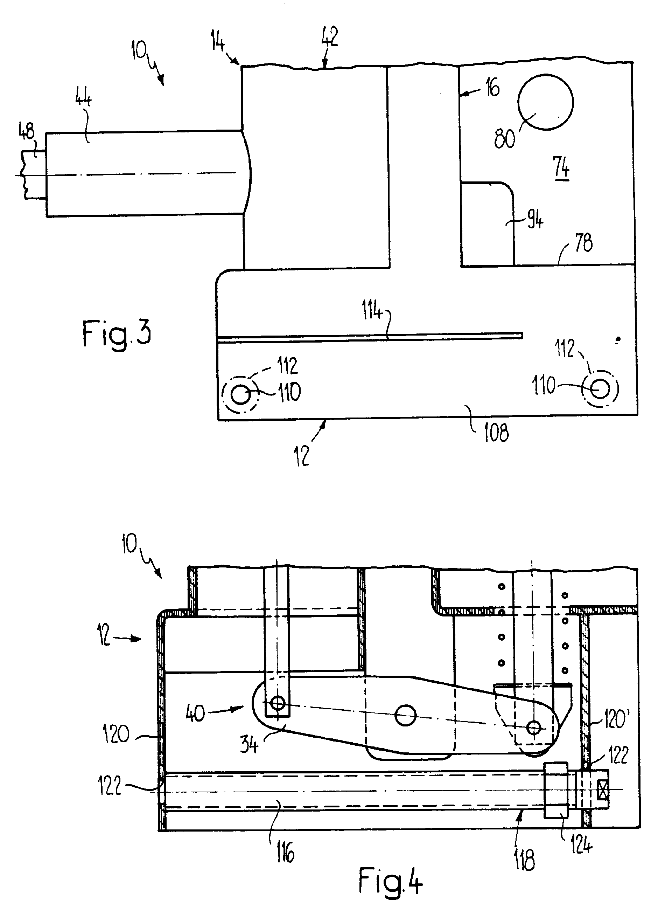

Auf der Rückseite des Wandteils 16 sind an der Wandteilwand 22 zwei zueinander parallele, voneinander beabstandete, vertikal verlaufende und rechtwinklig vom Wandteil 16 abstehende Lagerungsteile 74 angeformt. Diese Lagerungsteile 74 sind wandförmig ausgebildet und münden mit ihren unteren Enden 76 in die Deckenwand 78 des Fussteils 12. Jeder Lagerungsteil 74 weist einen Lagerdurchlass 80 auf, an welchem eine Antriebswelle 82 des Federkraftantriebes 36 drehbar gelagert ist (siehe Figuren 2 und 3). Die Achse 82′ der Antriebswelle 82 verläuft in horizontaler Richtung und parallel zum Wandteil 16 (siehe auch Figur 1). Ein solcher Federkraftantrieb ist in der CH-Patentanmeldung Nr. 00 800/89-1 ausführlich beschrieben.

Auf der Antriebswelle 82 sitzen drehfest, pro Pol zwei voneinander beabstandete, parallele Scheiben 84, von welchen in der Figur 2 nur eine dargestellt ist. Die Scheiben 84 weisen paarweise gegengleiche, um die Antriebswelle 82 ungefähr exzenterförmig umlaufende Nuten 86 auf, in welchen ein bolzenförmiges Hubglied 88 zwangsgeführt ist. Das Hubglied 88 ist am oberen Ende einer an einer Schwinge 90 und am doppelarmigen Hebel 34 schwenkbar gelagerten Lasche 92 angeordnet. Die Schwinge 90 ist an ihrem von der Lasche 92 entfernten Endbereich an einem an der Wandteilwand 22 und an der Deckenwand 78 angeformten Lagerschild 94 schwenkbar gelagert. Im Bereich der Laschen 92 sind in der Deckenwand 78 Durchlässe 96 ausgespart. Im Bereich zwischen der Schwinge 90 und dem doppelarmigen Hebel 34 ist die Lasche 92 von einer Kontaktdruckfeder 98 umgeben, welche sich über je eine Stützscheibe 100 am oberen Ende an der Lasche 92 und am unteren Ende am doppelarmigen Hebel 34 abstützt. Die Lasche 92 weist in ihrem unteren Endbereich ein Langloch 102 auf, durch welches hindurch ein Stift 104 verläuft, welcher sowohl mit der unteren Stützscheibe 100 als auch mit dem doppelarmigen Hebel 34 verbunden ist.

Der doppelarmige Hebel 34 ist an seinem dem Stift 104 gegenüber liegenden Endbereich über eine Isolierstange 106 mit der Verdickung 62 des Schaltstössels 60 wirkverbunden.

In der in der Figur 2 dargestellten Verdrehlage der Antriebswelle 82 des Federkraftantriebes 36 ist die Schalteranordnung eingeschaltet, wobei die beiden Schaltkontakte 54,58 jeder Vakuumschaltröhre 15 aneinander anliegen und mittels der gespannten Kontaktdruckfeder 98 gegeneinander gepresst werden. Um den Schalter auszuschalten wird die Antriebswelle 82 mittels einer nicht dargestellten Federanordnung, im gezeigten Beispiel um ungefähr 180°, verdreht, wodurch die Lasche 92 jedes Pols infolge der Zwangsführung des Hubgliedes 88 in den Nuten 86 der Scheiben 84 in eine obere, gestrichelt dargestellte Endlage 92′ gezogen wird. In dieser Position sind die beiden Schaltkontakte 54,58 voneinander abgehoben und die Kontaktdruckfeder 98 ist soweit entspannt als dies das Langloch 102 in der Lasche 92 zulässt. Zum Einschalten des Schalters wird die Antriebswelle 82 wiederum in der selben Drehrichtung mittels der nicht dargestellten Federanordnung, im gezeigten Beispiel um ca. 180°, verschwenkt, wodurch die Schaltkontakte 54,58 aneinander zur Anlage kommen und die Kontaktdruckfeder 98 wiederum gespannt wird. Es ist auch möglich durch entsprechende Formgebung der Nuten 86 in den Scheiben 84 für das Ein- bzw. Ausschalten unterschiedliche Drehwinkel der Antriebswelle 82 zu verwenden, wobei die Summe der Drehwinkel für ein Ein- und ein Ausschalten jeweils 360° beträgt.

An den Seitenwänden 108 des Fussteils 12 sind gegen aussen vorstehende, zapfenförmige Lagerglieder 110 angeformt, an welchen strichpunktiert angedeutete Fahrrollen 112 gelagert sind. Diese Fahrrollen 112 können beispielsweise in nicht dargestellten Schienen eines Schaltschrankes geführt sein. Falls die Fahrrollen 112 in Schienen auf dem Boden geführt sind, so ist es auch möglich, dass die Lagerglieder 110 gegen das Innere des Fussteils 12 von den Seitenwänden 108 abstehen.

Am Fussteil 12 sind weiter von den Seitenwänden 108 abstehende und in Verschieberichtung der Schalteranordnung verlaufende Kulissen 114 angeformt, siehe Figuren 1 und 3. Mittels diesen Kulissen 114 können beim Verfahren der Schalteranordnung Verriegelungen oder Shutter zu Schottwänden in einem Schaltschrank betätigt werden.

Figur 4 zeigt einen Schnitt gemäss Figur 2 durch den Fussteil 12 eines Isoliertragrahmens 10, der im wesentlichen gleich ausgebildet ist wie der in den Figuren 1 bis 3 gezeigte Isoliertragrahmen 10. Unterhalb des doppelarmigen Hebels 34 des Gestänges 40 ist eine in Verfahrrichtung der Schalteranordnung verlaufende Spindel 116 eines Schraubengetriebes 118 an, an der Front- und Rückwand 120,120′ des Fussteils 12 ausgebildeten, durchlassförmigen Lagerungselementen 122, bezüglich des Isoliertragrahmens 10 ortsfest, drehbar gelagert. Auf der Spindel 116 sitzt eine Laufmutter 124, die am nicht dargestellten Schrank drehfest und ortsfest gehalten ist. Durch Drehen der Spindel 116 von Hand oder mittels eines Elektromotores kann die Schalteranordnung von einer Ein-Stellung, in welcher die Anschlussleiter 46,48 mit ortsfesten Gegenkontakten in Eingriff stehen, in eine Trennstellung überführt werden, in welcher die Anschlussleiter 46,48 von den entsprechenden ortsfesten Gegenkontakten getrennt sind und umgekehrt.

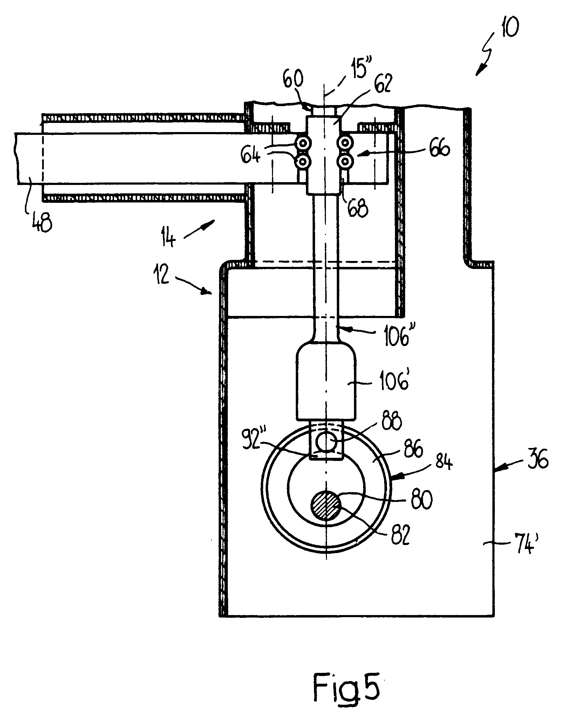

In der in der Figur 5 dargestellten Ausbildungsform ist der Federkraftantrieb 36 im Fussteil 12 des Isoliertragrahmens 10 angeordnet. Dabei sind die Lagerungsteile 74′, die den Lagerungsteilen 74 gemäss den Figuren 1 bis 3 entsprechen, im Innern des Fussteils 12 vorgesehen. Im Bereich des Isoliertragteils 14 ist der Isoliertragrahmen 10 gleich ausgebildet wie dies in den Figuren 1 bis 3 dargestellt ist. Der Isoliertragteil 14 wird deshalb nicht mehr näher beschrieben. Der in der Figur 5 dargestellte Fussteil 12 ist ebenfalls kastenförmig ausgebildet und gegen unten und die Rückseite hin offen. Die Antriebswelle 82 kreuzt rechtwinklig die Achsen 15˝ der Vakuumschaltröhren 15 (vergleiche Figur 2) und ist in entsprechenden Durchlässen 80 in den Lagerungsteilen 74′ drehbar gelagert. Auf der Antriebswelle 82 sitzen ebenfalls pro Pol drehfest zwei Scheiben 84 mit Nuten 86, in welchen die bolzenförmigen Hubglieder 80 geführt sind. Jedes Hubglied 80 ist mit einer Lasche 92˝ gekuppelt, welche mit einer allgemein bekannten, nicht dargestellten, im Innern einer glockenförmigen Erweiterung 106′ einer Isolierstange 106˝ angeordneten Kontaktdruckfederanordnung wirkverbunden ist. Die Isolierstange 106˝ verläuft in Richtung der Achse 15˝ der Vakuumschaltröhre 15 und ist an ihrem oberen Ende mit der Verdickung 62 des Schaltstössels 60 verbunden. Diese Verdickung 62 ist durch die Ausnehmung 68 im unteren Anschlussleiter 48 hindurchgeführt. Die Rollen 64 der Rollenkontaktanordnung 66 wälzen sich an der Ausnehmung 68 des Anschlussleiters 48 und an der Verdickung 62 ab. Die Funktionsweise des Federkraftantriebes 36 und der Kontaktdruckfederanordnung ist genau diesselbe wie im weiter oben dargelegten Ausführungsbeispiel und wird daher nicht mehr beschrieben. Für die Isolierstange 106˝ können selbstverständlich zusätzliche Führungsglieder vorgesehen sein. Diese Ausbildungsform ist besonders platzsparend und überdies kann die Antriebsleistung verlustarm an die Vakuumschaltröhren übertragen werden, sind doch keine Umlenkungen über Gestänge notwendig.

Es ist selbstverständlich auch denkbar, dass der Fussteil 12 einen Boden aufweist und gegen unten abgeschlossen ist. Dabei müssen allerdings bei einer Ausführungsform gemäss den Figuren 1 bis 3 an Wänden des Fussteils 12 entsprechende Aussparungen vorgesehen sein um die notwendigen Teile des Gestänges 40 in den Fussteil 12 einführen und darin montieren zu können. Bei dieser Ausführungsform könnte der Kontaktstössel 60 direkt an einem isolierenden doppelarmigen Hebel 34 angelenkt werden.

An den Lagerungsteilen 74,74′ kann nicht nur die Antriebswelle 82 gelagert sein, sondern diese Lagerungsteile 74,74′ und gegebenenfalls Wände des Fussteils 12 und des Wandteils 16 können so ausgebildet sein, dass an ihnen weitere und vorzugsweise alle Teile des Federkraftantriebes 36 gelagert und angeordnet werden können.

Der einstückige Isoliertragrahmen ist derart ausgebildet, dass praktisch alle Teile der gesamten Schalteranordnung an ihm befestigbar sind.

## Patentansprüche

1. Mehrpolige Vakuumschalteranordnung, insbesondere für Mittelspannung, mit einem an einem Gestell angeordneten, die Vakuumschaltröhren (15) der Schalteranordnung mindestens teilweise umfassenden Isoliertragteil (14), einem ebenfalls am Gestell angeordneten Federkraftantrieb (36), der über Gestänge (40) mit den bewegbaren Schaltkontakten (58) der Vakuumschaltröhren (15) verbunden ist, und mindestens einem Lagerungsteil (74,74') zum Lagern von Teilen (82) des Federkraftantriebes (36), wobei das Isoliertragteil (14), das Lagerungsteil (74,74') und das Gestell einen einstückigen Isoliertragrahmen (10) bilden.

2. Schalteranordnung nach Anspruch 1, dadurch gekennzeichnet, dass der Isoliertragrahmen (10) einen im wesentlichen hohlen, vorzugsweise gegen unten offenen, kastenförmigen Fussteil (12) aufweist, auf welchem der Isoliertragteil (14) angeordnet ist.

3. Schalteranordnung nach Anspruch 1 oder 2, dadurch gekennzeichnet, dass der Isoliertragteil (14) einen im wesentlichen ebenen, aufrechtstehenden Wandteil (16) aufweist an dem auf der einen Seite Isoliergehäuse (42) angeformt sind die die Vakuumschaltröhren (15), vorzugsweise vollständig, umgreifen.

4. Schalteranordnung nach Anspruch 3, dadurch gekennzeichnet, dass der Wandteil (16) doppelwandig, gegebenenfalls mit die beiden Wandteilwände (20,22) miteinander verbindenden Versteifungsstegen (18,24,28) ausgebildet ist.

5. Schalteranordnung nach Anspruch 3 oder 4, dadurch gekennzeichnet, dass am Wandteil (16) auf der den Isoliergehäusen (42) abgewandten Seite der mindestens eine Lagerungsteil (74) abstehend angeformt ist.

6. Schalteranordnung nach Anspruch 5, dadurch gekennzeichnet, dass der Fussteil (12) auf der den Isoliergehäusen (42) abgewandten Seite des Wandteils (16) gegenüber dem Wandteil (16) vorsteht, der mindestens eine Lagerungsteil (74) mit dem Fussteil (12) verbunden ist und vorzugsweise im Fussteil (12) Lagerstellen (32) zum Lagern von Gestängeteilen (40,34) vorgesehen sind.

7. Schalteranordnung nach einem der Ansprüche 2 bis 4, dadurch gekennzeichnet, dass der mindestens eine Lagerungsteil (74') im Innern des Fussteils (12) vorgesehen ist.

8. Schalteranordnung nach einem der Ansprüche 5 bis 7, dadurch gekennzeichnet, dass mindestens zwei, vorzugsweise ungefähr rechtwinklig zum Wandteil (16) verlaufende, zueinander parallele und voneinander beabstandete Lagerungsteile (74,74') vorgesehen sind.

9. Schalteranordnung nach einem der Ansprüche 1 bis 8, dadurch gekennzeichnet, dass am Isoliertragrahmen (10), vorzugsweise am Fussteil (12), Lagerglieder (110) für Fahrrollen (112) angeformt sind.

10. Schalteranordnung nach einem der Ansprüche 1 bis 9, dadurch gekennzeichnet, dass am Isoliertragrahmen (10), vorzugsweise am Fussteil (12), Kulissen (114), insbesondere zum Betätigen von Verriegelungen oder Shutter zu Schottwänden, angeformt sind.

11. Schalteranordnung nach einem der Ansprüche 1 bis 10, dadurch gekennzeichnet, dass am Fussteil (12) Lagerungselemente (122) für Teile (116) einer Antriebsanordnung (118) zum Verfahren der Schalteranordnung angeformt sind.

12. Schalteranordnung nach Anspruch 11, dadurch gekennzeichnet, dass die Antriebsanordnung ein Schraubengetriebe (118) aufweist, dessen in Verfahrrichtung der Schalteranordnung verlaufende Spindel (116) bezüglich des Isoliertragrahmens ortsfest und drehbar am Fussteil (12) gelagert ist.

## Claims

1. A multipole vacuum switch arrangement, in particular for medium voltage, having an insulating supporting part (14) which is arranged on an understructure and at least partially embraces the vacuum switch tubes (15) of the switch arrangement, having a spring drive (36) which is likewise arranged on the understructure and is connected to the movable switching contacts (58) of the vacuum switch tubes (15) via linkages (40), and having at least one bearing part (74, 74') to bear parts (82) of the spring drive (36), the insulating supporting part (14), the bearing part (74, 74') and the understructure forming a one-piece insulating supporting frame (10).

2. A switch arrangement in accordance with Claim 1, characterised in that the insulating supporting frame (10) has a base part (12) which is substantially hollow, is preferably open in the downwards direction, is box-shaped and has the insulating supporting part (14) arranged thereon.

3. A switch arrangement in accordance with Claim 1 or 2, characterised in that the insulating supporting part (14) has a substantially plane, upright wall part (16) on one side of which there are moulded insulating housings (42) which embrace, preferably completely, the vacuum switch tubes (15).

4. A switch arrangement in accordance with Claim 3, characterised in that the wall part (16) is double-walled, optionally with bracing crosspieces (18, 24, 28) connecting the two walls (20, 22) of the wall part to one another.

5. A switch arrangement in accordance with Claim 3 or 4, characterised in that the at least one bearing part (74) is moulded - in a projecting manner - on the side of the wall part (16) facing away from the insulating housings (42).

6. A switch arrangement in accordance with Claim 5, characterised in that the base part (12) projects in relation to the wall part (16) on the side of the wall part (16) which is facing away from the insulating housings (42), the at least one bearing part (74) is connected to the base part (12), and bearing sites (32) are provided to bear linkage parts (40, 34), preferably in the base part (12).

7. A switch arrangement in accordance with any one of Claims 2 to 4, characterised in that the at least one bearing part (74') is provided within the base part (12).

8. A switch arrangement in accordance with any one of Claims 5 to 7, characterised in that at least two bearing parts (74, 74') are provided which preferably run substantially at right angles to the wall part (16), are parallel to one another and are at a distance from one another.

9. A switch arrangement in accordance with any one of Claims 1 to 8, characterised in that bearing members (110) for travel rollers (112) are moulded on the insulating supporting frame (10), preferably on the base part (12).

10. A switch arrangement in accordance with any one of Claims 1 to 9, characterised in that links (114), in particular for operating locking devices or shutters of partition walls, are moulded on the insulating supporting frame (10), preferably on the base part (12).

11. A switch arrangement in accordance with any one of Claims 1 to 10, characterised in that bearing elements (122) for parts (116) of a driving arrangement (118) for moving the switch arrangement are moulded on the base part (12).

12. A switch arrangement in accordance with Claim 11, characterised in that the driving arrangement has a worm gear (118) whose spindle (116), running in the direction of motion of the switch arrangement, is mounted on the base part (12) so as to be fixed in relation to the insulating supporting frame and rotatable.

## Revendications

1. Dispositif multipolaire d'interrupteurs à vide, notamment pour une moyenne tension, comportant une partie de support isolante (14), qui est disposée sur un châssis et entoure au moins partiellement les tubes de commutation sous vide (15) du dispositif d'interrupteurs, un dispositif d'entraînement (36) utilisant la force d'un ressort, qui est disposé également sur le châssis et est relié par l'intermédiaire d'une tringlerie (40) aux contacts de coupure mobiles (58) des tubes de commutation sous vide (15), et au moins une partie de montage (74, 74′) servant à supporter des parties (82) du dispositif d'entraînement (36) utilisant la force d'un ressort, la partie de support isolante (14), la partie de montage (74, 74′) et le châssis formant un cadre de support isolant monobloc (10).

2. Dispositif d'interrupteurs selon la revendication 1, caractérisé en ce que le cadre de support isolant (10) possède une partie formant pied en forme de boîte (12), essentiellement vide et ouvert de préférence vers le bas et sur lequel est disposée la partie de support isolante (14).

3. Dispositif d'interrupteurs selon la revendication 1 ou 2, caractérisé en ce que la partie de support isolante (14) possède un élément de paroi vertical sensiblement plat (16), sur un côté duquel sont formés des boîtiers isolants (42), qui entourent, de préférence complètement, les tubes de commutation sous vide (15).

4. Dispositif à interrupteurs selon la revendication 3, caractérisé par le fait que l'élément de paroi (16) est réalisé à paroi double, et comporte éventuellement des barrettes de renforcement (18, 24, 28), qui relient entre elles les deux parois (20, 22) de l'élément de paroi.

5. Dispositif à interrupteurs selon la revendication 3 ou 4, caractérisé par le fait qu'au moins une partie de montage (74) est formée en saillie sur l'élément de paroi (16), sur le côté tourné à l'opposé des boîtiers isolants (42).

6. Dispositif d'interrupteurs selon la revendication 5, caractérisé en ce que la partie formant pied (12) fait saillie, sur le côté de l'élément de paroi (16) tourné à l'opposé des boîtiers isolants (42), par rapport à l'élément de paroi (16), et que la partie de montage (74) prévue en au moins un exemplaire et reliée à la partie formant pied (12) et que des paliers (32) servant à supporter des éléments de tringlerie (40, 34) sont prévus de préférence dans la partie formant pied (12).

7. Dispositif d'interrupteurs selon l'une des revendications 2 à 4, caractérisé par le fait que la partie de montage (74′) prévue en au moins un exemplaire est disposée à l'intérieur de la partie formant pied (12).

8. Dispositif d'interrupteurs selon l'une des revendications 5 à 7, caractérisé en ce qu'il est prévu au moins deux parties de montage (74, 74′) qui sont de préférence approximativement perpendiculaires à l'élément de paroi (16), sont parallèles entre elles et à une certaine distance l'une de l'autre.

9. Dispositif d'interrupteurs selon l'une des revendications 1 à 8, caractérisé en ce que des éléments de palier (110) pour des galets de roulement (112) sont formés sur le cadre de support isolant (10), de préférence sur la partie formant pied (12).

10. Dispositif d'interrupteurs selon l'une des revendications 1 à 9, caractérisé en ce que des coulisses (114), servant notamment à actionner des éléments de verrouillage ou des navettes par rapport à des parois intercalaires, sont formées sur le cadre de support isolant (10), de préférence à la partie formant pied (12).

11. Dispositif d'interrupteurs selon l'une des revendications 1 à 10, caractérisé en ce que des éléments de paliers (122) pour des parties (116) d'un dispositif d' entraînement (118) servant à déplacer le dispositif d'interrupteurs sont formés sur la partie formant pied (12).

12. Dispositif d'interrupteurs selon la revendication 11, caractérisé en ce que le dispositif d'entraînement possède un mouvement à vis (118), dont la broche (116), qui s'étend dans la direction de déplacement du dispositif d'interrupteurs est montée de façon fixe par rapport au cadre de support isolant et de manière à pouvoir tourner sur la partie formant pied (12).
